# FASCICULE DE BREVET EUROPEEN

(11) **EP 1 504 645 B1**
(45) Date de publication et mention de la délivrance du brevet: **18.10.2006**
(21) Numéro de dépôt: 04364054.9
(22) Date de dépôt: 20.07.2004
(51) Int. Cl.: A01C 17/00

(54) **Procédé d'épandage centrifuge d'engrais ou de produits similaires en grains**
Verfahren zum Verteilen von Dünger oder anderem kornförmigen Material
Method for broadcasting fertilizer or other similar granular products

(30) Priorité: 08.08.2003 FR 0309791
(43) Date de publication de la demande: 09.02.2005
(73) Titulaire: SULKY-BUREL S.A.S, 35220 Chateaubourg (FR)
(72) Inventeur: Clochard, Daniel, 35113 Domagne (FR); Leveille, Lionel, 35220 Saint Didier (FR)
(74) Mandataire: Branger, Jean-Yves

(56) Documents cités:
- EP-A- 0 384 132
- EP-A- 0 410 095
- EP-A- 1 238 578

## Description

La présente invention concerne un procédé d'épandage centrifuge d'engrais ou de produits similaires en grains.

Dans la suite de la présente demande, y compris les revendications, on utilisera le terme "produits" et l'expression "produits en grains" pour désigner indifféremment des engrais ou d'autres produits granuleux d'aspect similaire.

On connaît par le document EP-A-0903070 un épandeur qui comporte quatre éléments doseurs de produits en grains, et quatre disques épandeurs, chacun portant au moins deux pales distributrices.

Les produits sont distribués par les quatre disques selon quatre secteurs qui se chevauchent partiellement, et qui assurent une distribution uniforme des produits.

Cette manière de subdiviser en plusieurs secteurs la distribution des produits est intéressante, mais l'utilisation de quatre disques rend compliquée la structure de l'appareil et vient en grever le prix de revient.

On connaît par ailleurs par la demande française n° 02 01861 au nom du présent demandeur, un dispositif d'épandage centrifuge de produits en grains, qui comprend au moins un disque rotatif d'axe vertical, portant au moins deux pales éjectrices, dites standard, servant à l'épandage normal, et au moins une pale auxiliaire, associée à l'une des pales standard et servant à l'épandage de bordure, qui est plus courte que la pale standard et qui est positionnée devant cette dernière pour intercepter, en vue d'un épandage de bordure, le flux de produits déversés devant elle sur le disque et les projeter vers l'extérieur.

Ce dispositif comprend des moyens de sélection aptes à modifier la zone de chute des produits sur le disque, de sorte que dans un premier état d'épandage normal, la pale principale intercepte lesdits produits, tandis que la pale auxiliaire ne les intercepte pas, et que dans un second état d'épandage de bordure, la pale auxiliaire intercepte les produits, tandis que la pale principale n'intercepte pas de produits.

Selon un mode de réalisation, l'enceinte de stockage des produits est équipée de deux tubulures de distribution, et les moyens de sélection précités consistent en des moyens d'obturation sélectifs de l'une ou l'autre des tubulures.

Un autre dispositif semblable est connu du document EP-A- 0 410 095, dans lequel un dispositif d'alimentation simple est utilisé pour alimenter à la fois les deux pales.

La présente invention a pour but de proposer un procédé d'épandage qui permette, comme dans EP-A-0903070, de subdiviser en plusieurs secteurs la distribution des produits, tout en utilisant des moyens simples tels que ceux décrits dans la demande précitée du demandeur.

Dans une forme de réalisation spécifique, la présente invention a pour but de proposer un procédé qui se prête particulièrement bien à un épandage dans une région d'un champ qui se termine en pointe.

Il s'agit donc d'un procédé d'épandage centrifuge d'engrais ou de produits similaires en grains, selon lequel on fait usage d'une machine comportant :
- au moins un disque rotatif, d'axe vertical, portant au moins une pale éjectrice, dite principale, associée à au moins une pale auxiliaire, qui est plus courte que ladite pale principale et qui est positionnée devant cette dernière quand on considère le sens de rotation du disque,
- et une enceinte de stockage desdits produits, qui comprend des moyens distincts d'alimentation de ces produits dans une première zone située devant la pale principale, juste en arrière de la pale auxiliaire, et une seconde zone située devant la pale auxiliaire.

Ce procédé se caractérise essentiellement par le fait qu'on utilise simultanément lesdits moyens d'alimentation, de manière à déverser lesdits produits à la fois dans la première et dans la seconde zone.

Ainsi, si le disque comporte une seule pale principale et une seule pale auxiliaire, les produits vont être distribués selon deux secteurs qui se chevauchent partiellement. Si l'on a affaire à deux paires de pales principales et auxiliaires, les pales de chaque paire étant différentes, alors, on aura affaire à quatre secteurs, et ainsi de suite.

Selon d'autres caractéristiques avantageuses et non limitatives de l'invention :
- lesdits moyens consistent en des orifices distincts prévus à la base de ladite enceinte ;
- lesdits moyens consistent en un même orifice segmenté par une cloison ;
- lesdits moyens consistent en des goulottes ;
- on utilise des moyens de réglage des goulottes, de manière à faire varier la position des zones d'alimentation desdits produits ;
- la pale principale est rectiligne, tandis que la pale auxiliaire est courbe, de concavité dirigée vers l'avant ou inversement.

Dans un mode de réalisation particulier de l'invention, on obture partiellement le moyen d'alimentation des produits devant la pale principale, ou devant la pale auxiliaire.

Ainsi, le secteur de distribution des produits lié à cette pale voit son envergure diminuer.

Par ailleurs, ladite obturation peut se faire progressivement jusqu'à la fermeture complète desdits moyens, ce qui se prête à un épandage dans une région d'un champ qui se termine en pointe.

Selon un mode de réalisation particulier, on utilise une machine comportant deux disques rotatifs disposés symétriquement de part et d'autre de son axe médian longitudinal.

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue schématique de côté d'un tracteur qui peut être utilisé pour la mise en oeuvre du procédé selon l'invention ;
- la figure 2 est une vue de dessus schématique d'un mode de réalisation possible d'un disque équipant le tracteur de la figure 1 ;
- les figures 3 et 4 sont respectivement des vues en perspective et de côté de ce disque, ainsi que, notamment, de la partie inférieure de l'enceinte de stockage dans laquelle sont contenus les grains et de leurs moyens d'alimentation ;
- la figure 5 est un spectre de distribution de grains obtenu en utilisant un disque présentant deux paires de pales principales et auxiliaires identiques ;
- la figure 6 est également un spectre de distribution de grains, obtenu avec un disque présentant deux paires de pales principales et auxiliaires différentes, tel que le disque de la figure 2 ;
- la figure 7 représente deux spectres obtenus avec un disque présentant deux paires de pales principales et auxiliaires différentes, les moyens de distribution des grains sur les pales principales ayant été obturés ;
- la figure 8 est un schéma analogue à la figure 6, représentant le spectre obtenu à l'aide d'une machine équipée de deux disques rotatifs tournant en sens inverse et disposés symétriquement de part et d'autre de l'axe médian longitudinal de cette machine ;
- la figure 9 est un schéma destiné à illustrer la manière dont est mis en oeuvre le procédé selon l'invention, pour un épandage dans une région d'un champ se terminant en pointe.

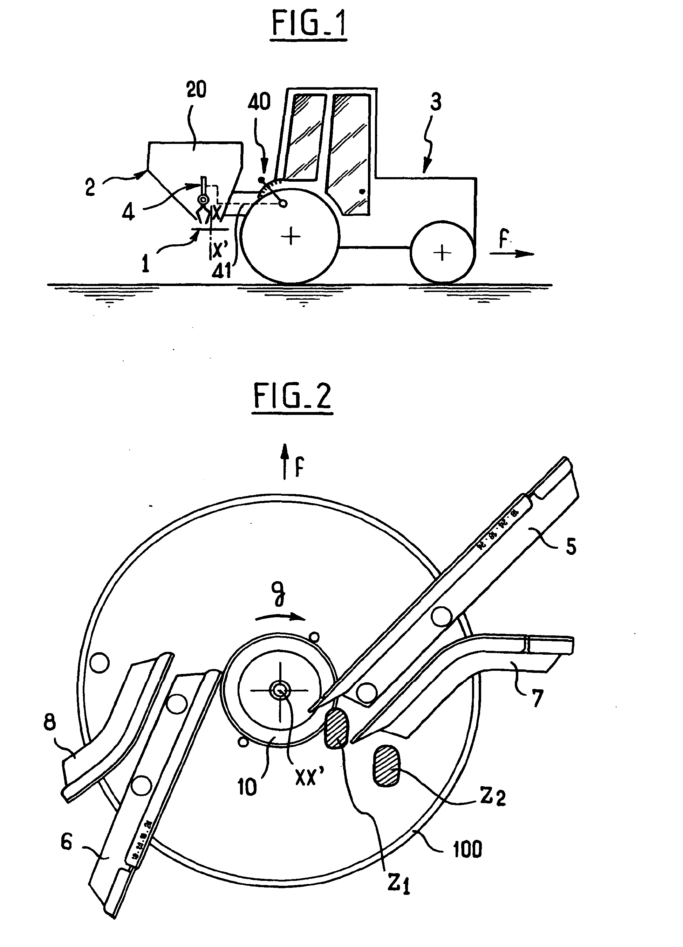

La machine d'épandage représentée à la figure 1 est une machine d'épandage d'engrais de type connu. Cette machine est montée à l'arrière d'un tracteur. Elle comporte une enceinte de stockage du produit à épandre, qui consiste en une trémie 20.

Le sens de déplacement du tracteur et de la machine d'épandage est symbolisé par la flèche **f**.

L'épandeur 2 est muni d'un disque rotatif ou d'une paire de disques rotatifs, sensiblement horizontal (ou horizontaux), d'axe vertical. Des moyens appropriés font tourner ce(s) disque(s) autour de leur axe **X-X'**, comme cela est bien connu.

Le disque 1 est disposé en dessous d'une ouverture de sortie de trémie, par exemple par l'intermédiaire de goulottes orientables portant la référence générale 4. Ces goulottes sont prévues, de façon connue, pour régler la largeur de travail.

Sur l'épandeur est prévu un moyen de réglage 40 tel qu'un levier, dont l'actionnement par l'opérateur permet de modifier l'orientation des goulottes 4. Dans le mode de réalisation de la figure 1, ce réglage se fait par l'intermédiaire d'un système de commande à distance 41, symbolisé par un trait interrompu. Le levier est disposé de telle façon que l'opérateur puisse l'actionner sans avoir à quitter son poste de conduite.

Le disque 1 représenté à la figure 2 est de type généralement connu. Sur une machine équipée de deux disques du même type, ce disque est placé sur la gauche, lorsqu'on considère la direction d'avancement du tracteur.

Il possède une partie centrale 10 en forme de dôme, et est entraîné en rotation autour d'un axe vertical, ou approximativement vertical **XX'**, le sens de rotation étant symbolisé par la flèche g.

Le sens d'avancement **f** de la machine sur le sol est également indiqué à la figure 2.

La face supérieure du disque 1, entre le dôme 10 et le bord périphérique 100 est légèrement tronconique, d'axe au sommet très évasé, de sorte que les grains quittent le disque avec une trajectoire ayant une faible composante horizontale dirigée vers le haut.

Ce disque est pourvu de deux pales, dites principales, 5 et 6, qui sont fixées sur le dessus du disque. Comme cela est bien connu, les deux pales sont disposées à l'opposé l'une de l'autre sur le disque. Leur direction est approximativement tangentielle par rapport au bord circulaire de la partie 10 en forme de dôme.

L'une des pales, en l'occurrence, la pale 5, est plus longue que l'autre.

De manière bien connue, chacune des pales est un profilé métallique ayant une section en forme de U, dont les branches latérales sont sensiblement horizontales et dont l'ouverture est tournée vers l'avant, en considération du sens de rotation g.

De préférence, la position angulaire des pales par rapport au disque est prévue réglable, afin de permettre l'obtention de différents spectres de distribution des grains.

On pourra le cas échéant se reporter au brevet n° 96 09693 (publication n° 2 751 505) au nom du présent demandeur, pour y trouver des formes de réalisation particulières de ces pales.

Les pales 5 et 6 sont fixées à demeure sur le disque, par exemple au moyen de rivets ou de boulons.

Egalement de manière connue, le disque est équipé de pales auxiliaires, référencée 7 et 8, qui sont positionnées sur le disque, en avant des pales longues 5 et 6.

Il s'agit de pales plus courtes que les pales principales associées, et présentant par exemple une forme courbe telle que celle montrée dans le mode de réalisation présenté ici. Leur concavité est tournée vers l'avant (si on considère son sens d'avancement lors de la rotation du disque).

A la figure 2, on a référencé Z₁ et Z₂ les zones de chutes des produits sur le disque 1. La première zone Z₁ est située devant la pale principale 5, juste en arrière de la pale auxiliaire 7, tandis que la zone Z₂ est située devant la pale auxiliaire 7.

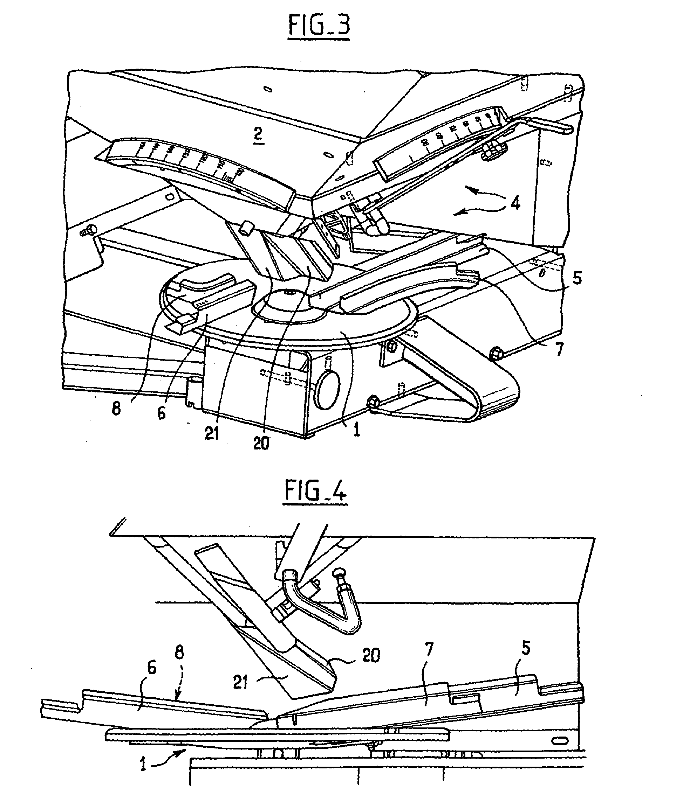

Dans l'exemple présenté ici et comme montré aux figures 3 et 4, les produits qui tombent dans les zones précitées proviennent de la trémie 2 et sont acheminés via deux goulottes 20 et 21. La goulotte 21 dessert la zone Z₁, tandis que la goulotte 20 dessert la zone Z₂.

De préférence, on utilise des moyens de réglage individuels de chacune des goulottes, de manière à pouvoir faire varier l'implantation des zones Z₁ et Z₂.

Conformément au procédé selon la présente invention, on utilise simultanément les moyens d'alimentation que constituent les deux goulottes, de manière à déverser, en même temps, les produits à la fois dans la première et dans la deuxième zone.

Dans un mode de réalisation non représenté, ces moyens de distribution pourraient simplement être constitués par des orifices distincts prévus à la base de la trémie de stockage. Dans encore une variante, il pourrait s'agir d'un seul et même orifice segmenté par une cloison.

Comme montré à la figure 3, les moyens 4 précités permettent, le cas échéant, de faire varier l'orientation des goulottes pour modifier la position des zones de distribution des produits.

Dans une forme de réalisation non représentée sur les dessins, les goulottes pourraient être prévues fixes, tandis que la position angulaire ou la longueur des pales serait réglable. Dans une autre forme de réalisation, les goulottes pourraient être également prévues fixes, tandis que la vitesse de rotation des disques pourrait être réglable.

Dans encore un autre mode de réalisation, les goulottes pourraient être fixes et la position du disque réglable.

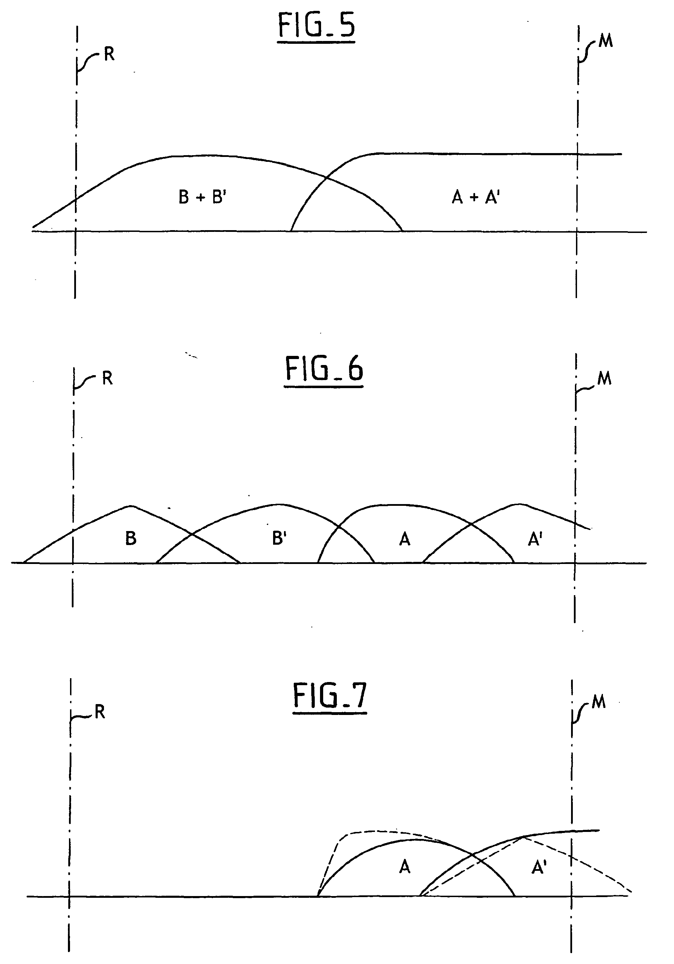

Les figures 5 et 6 annexées sont des spectres de distribution de grains obtenus en mettant en oeuvre le procédé selon l'invention.

Plus précisément, le spectre de la figure 5 est celui qu'on obtient en utilisant un disque tel que celui de la figure 2, mais présentant deux pales principales identiques, et deux pales auxiliaires identiques.

On a défini par la ligne en traits mixtes M, l'axe médian de déplacement du tracteur et par la ligne en traits mixtes R, la région limite atteinte par les grains distribué par le disque.

La zone de distribution A+A' est celle qui résulte de la distribution des grains par les pales auxiliaires, tandis que la zone B+B' résulte de la distribution des grains par les pales principales.

Dans le cas du disque de la figure 2, dans lequel les pales principales et auxiliaires sont différentes, on obtient alors un spectre constitué de quatre zones différenciées A, A', B et B'. Elles correspondent respectivement aux produits distribués par les pales 7, 8, 5 et 6.

Bien entendu, on peut régler le débit d'alimentation des produits dans chaque goulotte, de manière par exemple à ce qu'ils ne soient pas strictement identiques.

Selon une forme préférée du procédé selon l'invention, on obture partiellement les moyens d'alimentation devant les pales principales.

Lorsque ces moyens consistent en les goulottes précitées, il peut s'agir alors d'un volet ou de tout autre moyen permettant de limiter l'accès des grains à la goulotte 21.

Si cette obturation se fait de manière progressive et qu'on arrive à une obturation complète de la goulotte, on obtient alors un spectre tel que celui représenté en traits pleins à la figure 7.

Sur cette figure est également représenté, en traits interrompus, le spectre obtenu avec un réglage des goulottes autorisant un épandage en bordure de champ.

On peut également procéder à une obturation progressive, jusqu'à fermeture complète du moyen d'alimentation en grains devant les pales auxiliaires, en l'occurrence de la goulotte 20.

Cette manière de procéder peut s'avérer très utile pour épandre des produits dans un champ qui se termine en pointe, puisqu'il suffit d'obturer progressivement la goulotte adéquate pour, en définitive, limiter l'épandage à la seule zone la plus proche de l'axe de déplacement du tracteur.

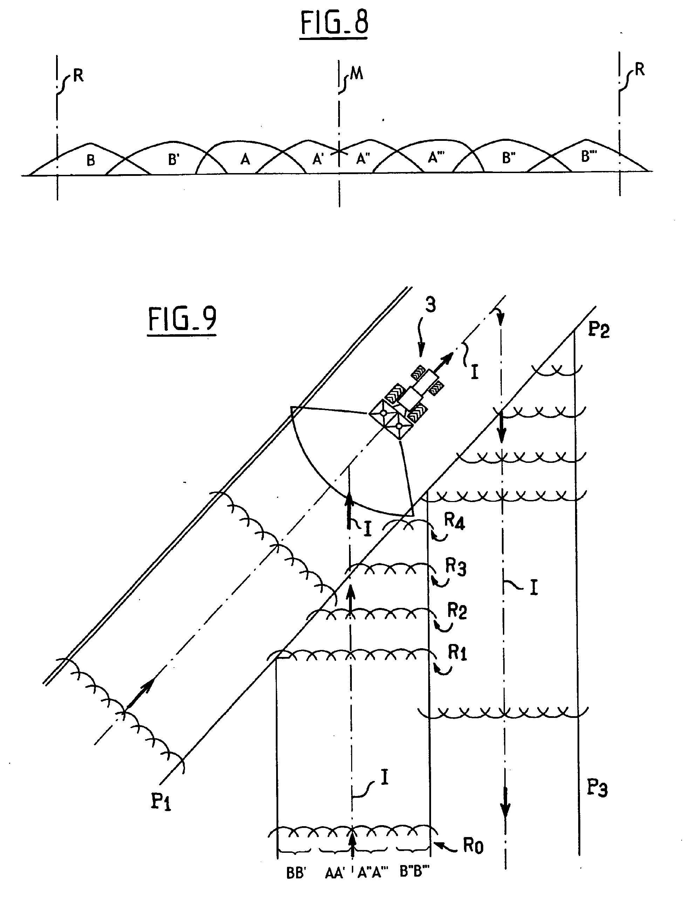

Comme mentionné plus haut, la figure 8 annexée est un schéma analogue à la figure 6, représentant le spectre obtenu à l'aide d'une machine équipée de deux disques rotatifs tournant en sens inverse et disposés symétriquement de part et d'autre de l'axe médian longitudinal de cette machine.

Chaque disque, du type de celui de la figure 2, comporte donc deux paires de pales principales et auxiliaires différentes.

Le spectre de la figure 8 est donc constitué de huit zones (de la gauche vers la droite) B, B', A, A', A", A"', B" et B"'.

Les zones B, B', B" et B"' correspondent aux secteurs de distribution des grains par les pales principales, tandis que les zones restantes correspondent aux secteurs de distribution des grains par les pales auxiliaires.

En référence à la figure 9, on se propose de réaliser un épandage dans une région d'un champ se terminant en pointe. Cette dernière est identifiée par les points P₁, P₂ et P₃ sur la figure.

Le déplacement du tracteur est quant à lui identifié par la lettre I.

Entre les positions R₀ et R₁ du tracteur, la totalité des goulottes alimente les disques qui distribuent les grains. On obtient un spectre du type de la figure 8.

Au fur et à mesure que l'on se rapproche de la pointe du champ, c'est-à-dire quand on passe successivement dans les positions R₂, R₃ puis R₄, on ferme successivement les moyens d'alimentation des pales principales du disque de gauche, puis des moyens d'alimentation des pales auxiliaires de ce même disque, et enfin les moyens d'alimentation des pales auxiliaires du second disque.

Avant que le tracteur effectue un demi tour, on procède à la fermeture des moyens d'alimentation des pales principales du second disque.

En quelque sorte, on réduit la largeur d'épandage par quarts successifs. Cela permet de gérer au mieux la distribution des produits dans cette région en pointe du champ.

Une fois le demi tour effectué, on procède de la manière inverse à celle explicitée ci-dessus, en ouvrant successivement les moyens d'alimentation précités.

Selon une forme de réalisation préférée, l'obturation, respectivement l'ouverture des moyens d'alimentation peut être géré automatiquement par un ordinateur embarqué, éventuellement couplé à un système de repérage de l'emplacement et de la forme du champ par satellite, du type "géolocalisation".

Dans les présents exemples, on s'est placé dans l'hypothèse où on utilise deux pales principales et deux pales auxiliaires par disque. Toutefois, dans des modes de réalisation non décrits, on pourrait utiliser seulement une pale principale et une pale auxiliaire ou, au contraire, une pale principale et deux pales auxiliaires.

## Revendications

1. Procédé d'épandage centrifuge d'engrais ou de produits similaires en grains, selon lequel on fait usage d'une machine comportant :
- au moins un disque rotatif (1), d'axe vertical (X-X'), portant au moins une pale éjectrice (5,6), dite principale, associée à au moins une pale auxiliaire (7,8), qui est plus courte que ladite pale principale (5,6) et qui est positionnée devant cette dernière quand on considère le sens de rotation (g) du disque (1),
- et une enceinte de stockage (2) desdits produits, qui comprend des moyens distincts (20,21) d'alimentation de ces produits dans une première zone (z₁) située devant la pale principale (5,6), juste en arrière de la pale auxiliaire (7,8), et une seconde zone (z₂) située devant la pale auxiliaire (7,8),
**caractérisé par le fait qu**'on utilise simultanément lesdits moyens de d'alimentation (20,21), de manière à déverser lesdits produits à la fois dans la première et dans la seconde zone (z₁,z₂).

2. Procédé selon la revendication 1, **caractérisé par le fait que** lesdits moyens (20,21) consistent en des orifices distincts prévus à la base de ladite enceinte (2).

3. Procédé selon la revendication 1, **caractérisé par le fait que** lesdits moyens (20,21) consistent en un même orifice segmenté par une cloison.

4. Procédé selon la revendication 1, **caractérisé par le fait que** lesdits moyens (20,21) consistent en des goulottes.

5. Procédé selon la revendication 4, **caractérisé par le fait qu**'on utilise des moyens de réglage (4) des goulottes, de manière à faire varier la position des zones de d'alimentation desdits produits.

6. Procédé selon l'une des revendications 1 à 5, **caractérisé par le fait que** l'on obture partiellement le moyen d'alimentation (21) des produits devant la pale principale (5,6).

7. Procédé selon l'une des revendications 1 à 6, **caractérisé par le fait que** l'on obture partiellement le moyen d'alimentation (20) des produits devant la pale auxiliaire (7,8).

8. Procédé selon la revendication 6 ou 7, **caractérisé par le fait que** ladite obturation se fait progressivement jusqu'à la fermeture complète dudit moyen.

9. Procédé selon l'une des revendications 1 à 8, **caractérisé par le fait que** la pale principale (5,6) est rectiligne, tandis que la pale auxiliaire (7,8) est courbe, de concavité dirigée vers l'avant, ou inversement.

10. Procédé selon l'une des revendications 1 à 9, **caractérisé par le fait qu**'on utilise une machine comportant deux disques rotatifs (1) disposés symétriquement de part et d'autre de son axe médian longitudinal.

11. Procédé selon l'une des revendications 1 à 10, **caractérisé par le fait que** l'obturation, respectivement l'ouverture des moyens d'alimentation (20,21) est gérée automatiquement par un ordinateur embarqué, éventuellement couplé à un système de repérage de l'emplacement et de la forme du champ par satellite.

## Claims

1. Method for centrifugally spreading fertilizer or similar granular products, according to which use is made of a machine comprising:
- at least one rotary disc (1), of vertical axis (**X**-**X**'), bearing at least one ejector blade (5, 6), referred to as the main blade, combined with at least one auxiliary blade (7, 8), which is shorter than the said main blade (5, 6) and which is positioned in front of the latter with respect to the direction of rotation (g) of the disc (1),
- and a storage bin (2) for the said products, which comprises separate feed means (20, 21) for feeding these products into a first zone (z₁) situated in front of the main blade (5, 6), just behind the auxiliary blade (7, 8), and a second zone (z₂) situated in front of the auxiliary blade (7, 8),
**characterized in that** the said feed means (20, 21) are used simultaneously so as to discharge the said products both into the first and into the second zone (z₁, z₂).

2. Method according to Claim 1, **characterized in that** the said means (20, 21) consist of separate openings provided at the base of the said bin (2).

3. Method according to Claim 1, **characterized in that** the said means (20, 21) consist of one and the same opening segmented by a partition wall.

4. Method according to Claim 1, **characterized in that** the said means (20, 21) consist of chutes.

5. Method according to Claim 4, **characterized in that** control means (4) for controlling the chutes are used, so as to vary the position of the feed zones for the said products.

6. Method according to one of Claims 1 to 5, **characterized in that** the feed means (21) for feeding the products in front of the main blade (5, 6) is partially obturated.

7. Method according to one of Claims 1 to 6, **characterized in that** the feed means (20) for feeding the products in front of the auxiliary blade (7, 8) is partially obturated.

8. Method according to Claim 6 or 7, **characterized in that** the said obturation is effected progressively up to the complete closure of the said means.

9. Method according to one of Claims 1 to 8, **characterized in that** the main blade (5, 6) is rectilinear, whereas the auxiliary blade (7, 8) is curved, with forward-facing concavity, or vice versa.

10. Method according to one of Claims 1 to 9, **characterized in that** a machine is used comprising two rotary discs (1) disposed symmetrically on either side of its longitudinal centre axis.

11. Method according to one of Claims 1 to 10, **characterized in that** the obturation and opening-up of the feed means (20, 21) is managed automatically by an on-board computer, possibly linked to a satellite navigation system for locating the site and shape of the field.

## Patentansprüche

1. Verfahren zum Fliehkraftstreuen von Dünger oder ähnlichen als Körner vorliegenden Produkten, gemäß dem eine Maschine eingesetzt wird, die folgendes umfaßt:
- wenigstens eine rotierende Scheibe (1) mit vertikaler Achse (X-X'), die wenigstens ein Auswurfsschaufelblatt (5, 6), das als Hauptschaufelblatt bezeichnet wird, umfaßt und dem wenigstens ein Nebenschaufelblatt (7,8) zugeordnet ist, das kürzer ist als das Hauptschaufelblatt (5, 6) und das vor letzterem positioniert ist, wenn man die Rotationsrichtung (g) der Scheibe (1) berücksichtigt,
- und einen Behälter zur Speicherung (2) der Produkte, der zwei verschiedene Mittel (20, 21) zum Zuführen dieser Produkte in eine erste Zone (z₁), die sich vor dem Hauptschaufelblatt (5, 6) und knapp hinter dem Nebenschaufelblatt (7, 8) befindet, und in eine zweite Zone (z₂), die sich vor dem Nebenschaufelblatt (7, 8) befindet, umfaßt,
**dadurch gekennzeichnet, daß** die Zuführungsmittel (20, 21) gleichzeitig eingesetzt werden, und dies derart, daß die Produkte gleichzeitig in die erste und in die zweite Zone (z₁, z₂) ausgegeben werden.

2. Verfahren nach Anspruch 1, **dadurch gekennzeichnet, daß** die Mittel (20, 21) aus verschiedenen Öffnungen bestehen, die an der Basis des Behälters (2) vorgesehen sind.

3. Verfahren nach Anspruch 1, **dadurch gekennzeichnet, daß** die Mittel (20, 21) aus einer einzigen Öffnungen bestehen, die durch eine Trennwand unterteilt ist.

4. Verfahren nach Anspruch 1, **dadurch gekennzeichnet, daß** die Mittel (20, 21) aus Rinnen bestehen.

5. Verfahren nach Anspruch 4, **dadurch gekennzeichnet, daß** Mittel zum Einstellen (4) der Rinnen verwendet werden, derart, daß die Position der Zuführungszonen der Produkte verändert wird.

6. Verfahren nach einem der Ansprüche 1 bis 5, **dadurch gekennzeichnet, daß** das Mittel zum Zuführen (21) der Produkte vor das Hauptschaufelblatt (5, 6) teilweise verschlossen wird.

7. Verfahren nach einem der Ansprüche 1 bis 6, **dadurch gekennzeichnet, daß** das Mittel zum Zuführen (20) der Produkte vor das Nebenschaufelblatt (7, 8) teilweise verschlossen wird.

8. Verfahren nach Anspruch 6 oder 7, **dadurch gekennzeichnet, daß** das Verschließen fortschreitend geschieht, bis zum vollständigen Verschließen des Mittels.

9. Verfahren nach einem der Ansprüche 1 bis 8, **dadurch gekennzeichnet, daß** das Hauptschaufelblatt (5, 6) geradlinig ist, wohingegen das Nebenschaufelblatt (7, 8) gekrümmt ist, mit einer nach vorne orientierten Konkavität, oder umgekehrt.

10. Verfahren nach einem der Ansprüche 1 bis 9, **dadurch gekennzeichnet, daß** eine Maschine verwendet wird, die zwei rotierende Scheiben (1) umfaßt, die symmetrisch auf beiden Seiten ihrer mittleren Längsachse angeordnet sind.

11. Verfahren nach einem der Ansprüche 1 bis 10, **dadurch gekennzeichnet, daß** das Verschließen bzw. das Öffnen der Zuführungsmittel (20, 21) automatisch von einem eingebetteten Computer verwaltet wird, der eventuell an ein System zur Bestimmung des Standortes und der Form des Feldes über Satellit angeschlossen ist.
